# EUROPÄISCHE PATENTSCHRIFT

(11) **EP 0 509 344 B1**
(45) Veröffentlichungstag und Bekanntmachung des Hinweises auf die Patenterteilung: **15.06.1994**
(21) Anmeldenummer: 92105768.3
(22) Anmeldetag: 03.04.1992
(51) Int. Cl.: F16L 55/04

(54) **Druckschlauch und hülsenförmiger Drosseleinsatz dafür**
Pressure hose and tubular throttle insert therefor
Tuyau souple sous pression et insert d'étranglement de forme tubulaire pour celui-ci

(30) Priorität: 13.04.1991 DE 4112143
(43) Veröffentlichungstag der Anmeldung: 21.10.1992
(73) Patentinhaber: Volkswagen Aktiengesellschaft, 38436 Wolfsburg (DE)
(72) Erfinder: Buchholz, Peter, W-3170 Gifhorn (DE); Schnabel, Heinz, W-3338 Schöningen (DE); Warnecke, Rolf, Dipl.-Ing., W-3170 Gifhorn (DE)

(56) Entgegenhaltungen:
- DE-A- 3 339 876
- DE-A- 3 922 101
- US-A- 4 285 534

## Beschreibung

Druckschläuche in Form von Dehnschläuchen werden in Hydraulikkreisläufen, z. B. in Servolenkanlagen von Kraftfahrzeugen, eingesetzt, um z. B. durch Hydropumpen o. ä. hervorgerufene Druckpulsationen und damit verbundene störende Brummgeräusche o. ä. zu reduzieren. Solche Dehnschläuche sind aus - in gewissen Grenzen - dehnbarem Schlauchmaterial gefertigt, so daß sich die Schlauchwandung in Abhängigkeit vom Druck des den Schlauch durchströmenden Druckmediums entsprechend weiten und/oder längen kann. Aufgrund ihrer konstruktiven Auslegung erfahren solche Dehnschläuche also eine druckabhängige Änderung des Schlauchvolumens (Schlauchinneres), wodurch die Druckpulsationen ausgangs des Dehnschlauches spürbar geringer werden als eingangs des Dehnschlauches. Die Dehnschläuche können somit quasi als zeitweilige - druckausgleichende - Druckspeicher angesehen werden.

Es hat sich gezeigt, daß das Dämpfungsvermögen solcher Dehnschläuche deutlich verbessert wird, wenn im Inneren des Schlauches ein Drosselglied mit axialem Drosseldurchlaß angeordnet wird, durch welches das Schlauchinnere in zwei durch den Drosseldurchlaß miteinander verbundene Schlauchkammern unterteilt wird. Ein solcher Dehnschlauch ist beispielsweise aus der US-A- 4 285 534 bekannt.

Eine noch bessere Pulsationsreduzierung wird mit z. B. aus der DE-A- 33 39 876 bekannten Dehnschläuchen erzielt, bei denen im Schlauchinneren nicht nur ein solches Drosselglied angeordnet ist, sondern auch ein am eigentlichen Dehnschlaucheinlaß angeschlossener Innenschlauch (Resonator) mit radialen Drosseldurchlässen, der - einen axialen Drosseldurchlaß freilassend - durch das Drosselglied hindurchgeführt ist und in der dahinterliegenden Schlauchkammer mündet.

Diese Drosselglieder sind jeweils als hülsenförmige Drosseleinsätze ausgebildet, die innerhalb des Schlauches mittels einer den Schlauch im Bereich des Drosseleinsatzes von außen fest umschließenden Quetschhülse fixiert sind.

Hülsenförmige Drosseleinsätze, durch die ein Innenschlauch hindurchgeführt wird, sind im Vergleich zu anderen Drosseleinsätzen gleich dicker Dehnschläuche zwangsläufig vergleichsweise dünnwandig, da sie wegen des hindurchzuführenden Innenschlauches mit einem größeren Innendurchmesser versehen werden müssen. Die über die äußere Quetschhülse aufzubringenden radialen Spannkräfte zur Fixierung des hülsenförmigen Drosseleinsatzes müssen daher kleiner bemessen werden als bei dickwandigeren Drosseleinsätzen, um den Drosseleinsatz nicht zu verformen.

Insbesondere solche vergleichsweise dünnwandigen Drosseleinsätze werden daher auf ihrer äußeren Mantelfläche häufig mit mehreren im axialen Abstand nebeneinander angeordneten, vorzugsweise umlaufenden Umfangsrippen versehen, wie z. B. in Fig. 4 der DE-A- 39 22 101 dargestellt.

In der Praxis hat sich gezeigt, daß die Reduzierung der Quetschhülsenspannkräfte trotz einer solchen gerippten Außenkontur häufig dazu führt, daß sich der hülsenförmige Drosseleinsatz im Verlaufe des Betriebs aus seiner durch die äußere Quetschhülse an sich festgelegten Position innerhalb des Schlauches in axialer Richtung mehr oder weniger verschiebt und unter Umständen vollständig auswandert.

Versuche, ein Auswandern der Drosselhülse zu verhindern, indem über eine generell scharfkantigere Profilierung ein größerer Festsitz zwischen Schlauch und Drosseleinsatz erreicht wird, führen häufig dazu, daß die Schlauchseele insbesondere im Bereich der vorderen scharfkantigen Rippen eingeschnitten und der Schlauch somit undicht wird.

Die jeweilige Abstimmung von Rippenprofil und Quetschhülsenvorspannkraft unter Einbeziehung der Fertigungstoleranzen ist daher bisher i. a. eine Gratwanderung zwischen "zerstörter Schlauchseele" und "ausgewandertem Drosseleinsatz".

Vor diesem Hintergrund liegt der Erfindung die Aufgabe zugrunde, einen Druckschlauch mit mindestens einem hülsenförmigen Drosseleinsatz der im Oberbegriff des Patentanspruchs 1 genannten Art zu konzipieren, welcher sich nicht nur durch gewohnt gute Wirksamkeit bezüglich der Reduzierung von Druckpulsationen, sondern auch durch außergewöhnliche Haltbarkeit und damit durch lange Lebensdauer auszeichnet.

Diese Aufgabe wird erfindungsgemäß durch die Merkmale des Patentanspruchs 1 gelöst.

Vorteilhafte Ausgestaltungen und Weiterbildungen der Erfindung sind in den Unteransprüchen angegeben.

Erfindungsgemäß sind die im Abstand nebeneinander angeordneten Umfangsrippen des hülsenförmigen Drosseleinsatzes bezüglich Form und Abmessung nicht mehr wie üblich im wesentlichen gleich bemessen, sondern unterschiedlich.

Sie besitzen entweder unterschiedlich große Außendurchmesser oder unterschiedlich steile Rippenflanken oder aber sowohl unterschiedlich große Außendurchmesser als auch unterschiedlich steile Rippenflanken. Dabei sind sie derart angeordnet, daß sie - ausgehend von einer Umfangsrippe mit größtem Außendurchmesser und/oder mit steilsten Rippenflanken - von Umfangsrippe zu Umfangsrippe jeweils eine gleichgerichtete Änderung des Außendurchmessers und/oder der Steilheit der Rippenflanken erfahren.

Aufgrund der unterschiedlich ausgebildeten Umfangsrippen werden in vorteilhafter Weise alle Rippen zur Übertragung der im begrenzt dehnbaren Schlauch auftretenden Axialkräfte herangezogen, d. h. die aufgrund der Druckpulsationen im Schlauch auftretenden Längenänderungen pflanzen sich im Bereich des Drosseleinsatzes zumindest annähernd gleichmäßig über den gesamten Quetschbereich des Drosseleinsatzes fort. Die auftretenden Schiebewege des Schlauches sind dabei im Bereich der durchmessergrößten Umfangsrippen bzw. im Bereich der Umfangsrippen mit den steilsten Rippenflanken, d. h. im Bereich des größten Formschlusses, nur gering, im Bereich der durchmesserkleineren Umfangsrippen bzw. im Bereich der Umfangsrippen mit sanfter ansteigenden Rippenflanken dagegen entsprechend größer.

Im Gegensatz zu bekannten Dehnschläuchen findet hierbei auch bei starken Druckpulsationen ein axiales Auswandern des Drosseleinsatzes nicht statt.

Anhand einiger in der Zeichnung dargestellter Ausführungsbeispiele wird die Erfindung nachstehend näher erläutert.

In der Zeichnung zeigen in prinzipienhafter Darstellung
- Fig. 1: den Längsschnitt eines Dehnschlauchabschnitts mit einem hülsenförmigen Drosseleinsatz gemäß einem ersten Ausführungsbeispiel der Erfindung und
- Fig. 2: den Längsschnitt eines Dehnschlauchabschnitts mit Innenschlauch (Resonator) und einem hülsenförmigen Drosseleinsatz gemäß einem zweiten Ausführungsbeispiel der Erfindung.

In den Figuren sind lediglich die für das Verständnis der Erfindung wesentlichen Teile eines ansonsten üblichen Dehnschlauches 1 zur Reduzierung von in Hydraulikkreisläufen auftretenden Druckpulsationen, wie er z. B. aus der DE-A- 33 39 876, der DE-A- 39 22 101 oder der US-A- 4 285 534 bekannt ist, dargestellt und beziffert.

Im Inneren des aus einem begrenzt dehnbaren Schlauchmaterial gefertigten eigentlichen Schlauches 4 des Dehnschlauches 1 ist ein hülsenförmiger Drosseleinsatz 2 angeordnet, der innerhalb des Schlauches mittels einer den Schlauch 4 im Bereich des Drosseleinsatzes 2 von außen fest umschließenden Quetschhülse 3 fixiert ist.

Der Außenumfang des Drosseleinsatzes 2 trägt im Abstand zueinander angeordnete, vorzugsweise umlaufende, Umfangsrippen 5, 5*. Statt umlaufender Umfangsrippen könnten grundsätzlich auch aus mehreren Teilstücken zusammengesetzte, d. h. unterbrochene Rippen vorgesehen sein.

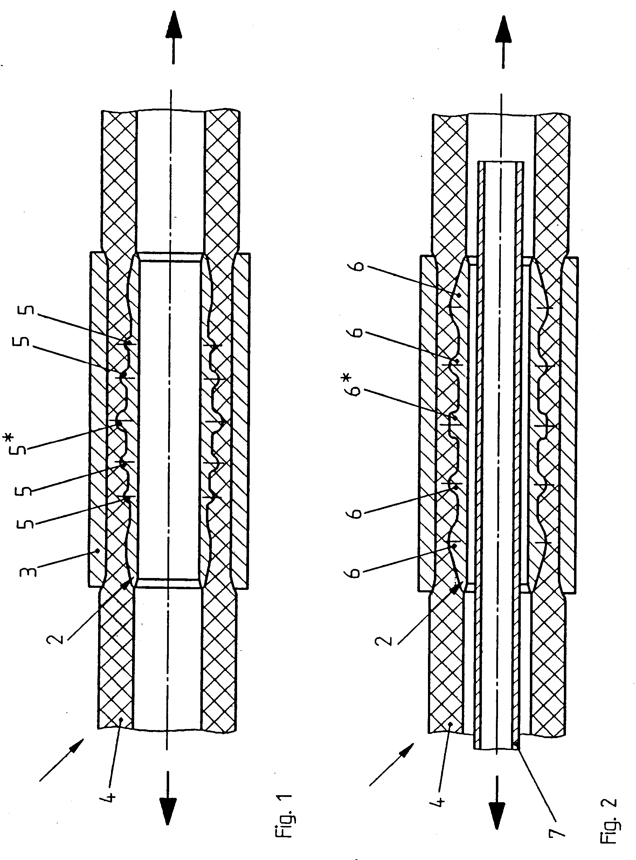

Die Umfangsrippen des in Figur 1 dargestellten Ausführungsbeispieles besitzen in üblicher Weise gerundete Rippenflanken, sind bezüglich ihres Außendurchmessers jedoch unterschiedlich groß bemessen. Sie sind dabei derart über die Länge des Drosseleinsatzes 2 verteilt angeordnet, daß sich - ausgehend von der Umfangsrippe 5* mit dem größten Außendurchmesser von Umfangsrippe 5 zu Umfangsrippe 5 jeweils eine gleichgerichtete Änderung des Außendurchmessers ergibt.

Im in Fig. 1 dargestellten Ausführungsbeispiel ist die Umfangsrippe 5* mit dem größten Außendurchmesser etwa mittig des Drosseleinsatzes 2 angeordnet. Die benachbarten Umfangsrippen 5 sind derart angeordnet und bemessen, daß ihr Außendurchmesser zu den beiden Hülsenenden hin abnimmt. Es ist leicht erkennbar, daß im Bereich der mittleren Umfangsrippe 5* mit dem größten Außendurchmesser der größte Formschluß vorliegt und daß der Formschluß zu den Hülsenenden hin abnimmt. Während der druckpulsationsbedingten pulsierenden Zugbelastungen des Schlauches 4, die durch Pfeile angedeutet sind, beteiligen sich sämtliche Umfangsrippen 5, 5* an der Übertragung der auftretenden Axialkräfte, doch unterschiedlich stark. Aufgrund der abgestuften Rippendurchmesser pflanzen sich dabei die im Bereich der Quetschhülse 3 im Schlauch 4 auftretenden Längenänderungen zumindest annähernd gleichmäßig über den gesamten Quetschbereich des Drosseleinsatzes 2 fort. Im Gegensatz dazu können sich derartige Ausdehnungsschwankungen im Quetschbereich von Drosseleinsätzen herkömmlicher Dehnschläuche mit durchmessergleichen Umfangsrippenprofilen nicht ungehindert bzw. gleichmäßig fortpflanzen, so daß die pulsationsbedingten pulsierenden axialen Zugkräfte im Schlauch i. a. allein von den jeweils äußeren Umfangsrippen aufgenommen werden müssen, wodurch es an diesen Stellen schnell zu Überbeanspruchungen des Schlauchmaterials und damit zu Beschädigungen des Dehnschlauches kommen kann.

So definiert, wie sich unter Zugbelastungen die auftretenden Schlauchlängungen über die Länge des Drosseleinsatzes verteilen, so definiert verteilen sich auch wieder die gegenläufigen Längenänderungen bei Fortfall der Zugbelastungen. Im Gegensatz zum Stand der Technik kommt es hierbei auch bei starken Druckpulsationen zu keiner axialen Verschiebung des Drosseleinsatzes 2 relativ zur Quetschhülse 3.

Abweichend vom in Fig. 1 dargestellten Ausführungsbeispiel ist es grundsätzlich auch denkbar im mittleren Bereich des Drosseleinsatzes 2 gegebenenfalls nicht eine, sondern zwei zueinander beabstandete Umfangsrippen 5* großen Durchmessers anzuordnen. Zu den Hülsenenden hin nehmen die benachbarten Rippen 5 dann wieder in der dargestellten Weise bezüglich ihres Außendurchmessers ab.

Im in Fig. 2 dargestellten zweiten Ausführungsbeispiel ist mit 7 ein durch den Drosseleinsatz 2 hindurchgeführter Innenschlauch (Resonator) angedeutet; ein solcher Innenschlauch kann selbstverständlich auch bei der in Fig. 1 dargestellten Ausführung vorgesehen sein. Umgekehrt kann der in Fig. 2 dargestellte Drosseleinsatz natürlich auch bei Schläuchen ohne Innenschlauch Verwendung finden.

Während der Drosseleinsatz 2 des in den Fig. 1 dargestellten Dehnschlauches Umfangsrippen 5*, 5 mit unterschiedlich großen Außendurchmessern aufweist,ist in Fig.2 ein Ausführungsbeispiel mit einem Drosseleinsatz dargestellt, welcher Umfangsrippen 6*, 6 mit im wesentlichen zwar gleichgroßen Außendurchmessern, jedoch mit unterschiedlich steilen Rippenflanken besitzt.

Diese Umfangsrippen sind ähnlich wie die in Fig. 1 derart über die Länge der Drosseleinsätze 2 verteilt angeordnet, daß - ausgehend von einer Umfangsrippe 6* mit den steilsten Rippenflanken - jeweils von Umfangsrippe 6 zu Umfangsrippe 6 eine gleichgerichtete Änderung der Steilheit der Rippenflanken zu verzeichnen ist. Ähnlich Fig. 1 ist bei diesem Dehnschlauch die Umfangsrippe 6* mit den steilsten Rippenflanken etwa Mitte des Drosseleinsatzes 2 angeordnet, während die dieser Umfangsrippe benachbarten übrigen Umfangsrippen 6 derart ausgebildet und angeordnet sind, daß die Steilheit der Rippenflanken zu den beiden Hülsenenden hin abnimmt.

Während beim Ausführungsbeispiel der Fig. 1 der stärkste Formschluß im Bereich der Umfangsrippen 5* mit dem größten Außendurchmesser vorliegt, ist bei dem in Fig. 2 gezeigten Ausführungsbeispiel der jeweils größte Formschluß im Bereich der Umfangsrippe 6* mit den steilsten Rippenflanken gegeben. Auch bei dieser Anordnung beteiligen sich alle Umfangsrippen 6*, 6 an der Übertragung der auftretenden Zugkräfte im Schlauch, wobei auch hier die im Schlauch auftretenden Längenänderungen sich zumindest annähernd gleichmäßig über den gesamten Quetschbereich des Drosseleinsatzes 2 fortpflanzen, weil der Schlauch 4 jeweils über vergleichsweise sanft ansteigende Umfangsrippen vergleichsweise leicht und über weniger sanft oder aber sogar steil ansteigende Umfangsrippen entsprechend schwerer hinwegzuziehen ist.

Insbesondere bei Dehnschläuchen mit einem durch den Drosseleinsatz 2 hindurchgeführten Innenschlauch 7 (Resonator), bei denen also vergleichsweise dünnwandige Drosseleinsätze vorliegen, ist es auch u. U. zweckmäßig, vergleichsweise dickwandige rippenlose Endbereiche vorzusehen, wie dies z. B. u. a. auch bei Fig. 4 der DE-A- 39 22 101 der Fall ist. In solchen Fällen ist darauf zu achten, daß diese Endbereiche im Vergleich zu den benachbarten Umfangsrippen jeweils möglichst flach ansteigen und abfallen.

Es versteht sich, daß es abweichend von den dargestellten beiden Ausführungsbeispielen auch möglich ist und sinnvoll sein kann, Mischformen beider Ausführungen zu bilden, d. h. sowohl Durchmesser als auch Flankensteilheit der Umfangsrippen zu modifizieren.

## Patentansprüche

1. Hülsenförmiger Drosseleinsatz (2) für Druckschläuche aus - in Grenzen - dehnbarem Schlauchmaterial, vorzugsweise für Dehnschläuche (1) zur Reduzierung von in Hydraulikkreisläufen auftretenden Druckpulsationen, mit auf dem Außenumfang angeordneten beabstandeten, vorzugsweise umlaufenden, Umfangsrippen (5, 5*; 6, 6*),
dadurch gekennzeichnet, daß Umfangsrippen (5, 5*; 6, 6*) mit unterschiedlich großen Außendurchmessern und/oder unterschiedlich steilen Rippenflanken vorgesehen sind, und daß diese derart angeordnet sind, daß - ausgehend von einer Umfangsrippe (5*; 6*) mit größtem Außendurchmesser und/oder mit steilsten Rippenflanken - von Umfangsrippe (5, 6) zu Umfangsrippe (5, 6) jeweils eine gleichgerichtete Änderung des Außendurchmessers und/oder der Steilheit der Rippenflanken vorliegt.

2. Hülsenförmiger Drosseleinsatz nach Anspruch 1,
dadurch gekennzeichnet, daß eine oder zwei Umfangsrippe(n) (5*; 6*) mit größtem Außendurchmesser und/oder mit steilsten Rippenflanken mittig angeordnet ist (sind),
und daß die benachbarten Umfangsrippen (5, 6) zu den beiden Hülsenenden hin in ihrem Außendurchmesser und/oder in der Steilheit ihrer Rippenflanken abnehmen.

3. Druckschlauch, insbesondere Dehnschlauch (1) zur Reduzierung von in Hydraulikkreisläufen auftretenden Druckpulsationen, mit mindestens einem im Schlauchinneren angeordneten hülsenförmigen Drosseleinsatz (2) nach einem der Ansprüche 1 oder 2, wobei der Drosseleinsatz (2) innerhalb des Schlauches (4) mittels einer den Schlauch (4) im Bereich des Drosseleinsatzes (2) von außen fest umschließenden Quetschhülse (3) fixiert ist.

## Claims

1. A tubular throttle insert (2) for pressure hoses made from - within limits - expandable hose material, chiefly for expandable hoses (1) for reducing pressure pulses occurring in hydraulic circuits, having - preferably circumferential - peripheral ribs (5, 5*; 6, 6*) which are disposed spaced on the outer surface,
characterised in that peripheral ribs (5, 5*; 6, 6*), having differently sized outer diameters and/or rib sides of differing steepness, are provided, and that these are disposed in such a way that - going outwards from a peripheral rib (5*; 6*) having the largest outer diameter and/or the steepest rib sides - from peripheral ribs (5, 6) to peripheral ribs (5, 6) there is in each case a parallel alteration of the outer diameter and/or the steepness of the rib sides.

2. A tubular throttle insert according to claim 1,
characterised in that one or two peripheral rib(s) (5*; 6*), having the largest outer diameter and/or having the steepest rib sides, is (are) centrally disposed, and that towards the two ends of the tube, the neighbouring peripheral ribs (5, 6) are reduced in their outer diameter and/or in the steepness of their rib sides.

3. A pressure hose, in particular an expandable hose (1) for reducing pressure pulses occurring in hydraulic circuits, having at least one tubular throttle insert (2) disposed in the interior of the hose according to one of the claims 1 or 2, wherein the throttle insert (2) is fixed inside the hose (4) by means of a pinch tube (3) fixedly surrounding the hose (4) on the outside in the region of the throttle insert (2).

## Revendications

1. Insert d'étranglement (2) en forme de douille pour tuyaux sous pression en matière pour tuyaux extensibles - de manière limitée -, de préférence pour tuyaux extensibles (1), destinés à réduire les pulsations de pression survenant dans les circuits hydrauliques, avec des nervures périphériques (5, 5* ; 6, 6*), disposées espacées sur le pourtour extérieur, de préférence continues, caractérisé en ce qu'il est prévu des nervures périphériques (5, 5* ; 6, 6*) avec des diamètres extérieurs différents et/ou des flancs de pente différente, en ce que celles-ci sont disposées de manière que - partant d'une nervure périphérique (5* ; 6*) présentant le plus grand diamètre extérieur et/ou les flancs les plus raides - on ait, d'une nervure périphérique (5, 6) à une autre nervure périphérique (5, 6), une variation dans le même sens du diamètre extérieur et/ou de la pente des flancs des nervures.

2. Insert d'étranglement en forme de douille selon la revendication 1, caractérisé en ce qu'une ou deux nervure(s) périphérique(s) (5* ; 6*) de plus grand diamètre extérieur et/ou avec les flancs les plus raides est (sont) disposée(s) au milieu et en ce que les nervures périphériques (5, 6) voisines diminuent vers les deux extrémités de la douille, dans leur diamètre extérieur et/ou la pente de leurs flancs.

3. Tuyau sous pression, en particulier tuyau extensible (1) destiné à réduire les pulsations de pression survenant dans les circuits hydrauliques, avec au moins un insert d'étranglement (2) en forme de douille, placé à l'intérieur du tuyau selon l'une des revendications 1 ou 2, dans lequel l'insert d'étranglement (2) est fixé à l'intérieur du tuyau (4), au moyen d'une douille d'écrasement (3) enserrant, fermement, de l'extérieur, le tuyau (4), dans la région de l'insert d'étranglement (2).
